(19) **Europäisches Patentamt / European Patent Office / Office européen des brevets**

(11) **EP 4 755 561 A1**

(12) **EUROPEAN PATENT APPLICATION**
published in accordance with Art. 153(4) EPC

(43) Date of publication:
**10.06.2026 Bulletin 2026/24**

(21) Application number: **24906903.0**

(22) Date of filing: **22.10.2024**

(51) International Patent Classification (IPC):
**B23K 9/04** (2006.01)  **B23K 9/095** (2006.01)

(52) Cooperative Patent Classification (CPC):
**B23K 9/04; B23K 9/095**

(86) International application number:
**PCT/JP2024/037547**

(87) International publication number:
**WO 2025/134515 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 JP 2023216840**

(71) Applicant: **KABUSHIKI KAISHA KOBE SEIKO SHO (KOBE STEEL, LTD.)**
**Hyogo 651-8585 (JP)**

(72) Inventors:
• **HIDA, Masatoshi**
  **Kobe-shi, Hyogo 651-2271 (JP)**
• **YOSHIKAWA, Akinori**
  **Kobe-shi, Hyogo 651-2271 (JP)**
• **SHINOZAKI, Takahiro**
  **Takasago-shi, Hyogo 676-8670 (JP)**
• **HUANG, Shuo**
  **Kobe-shi, Hyogo 651-2271 (JP)**
• **KUROSAWA, Eisuke**
  **Kobe-shi, Hyogo 651-2271 (JP)**
• **CHEN, Zhuyao**
  **Kobe-shi, Hyogo 651-2271 (JP)**
• **SANO, Moe**
  **Kobe-shi, Hyogo 651-2271 (JP)**
• **HASHIMOTO, Hiroshi**
  **Kobe-shi, Hyogo 651-2271 (JP)**
• **YAMADA, Takeshi**
  **Kobe-shi, Hyogo 651-2271 (JP)**

(74) Representative: **TBK**
**Bavariaring 4-6**
**80336 München (DE)**

(54) **CONTROL METHOD FOR LAMINATION MOLDING DEVICE, CONTROL DEVICE FOR LAMINATION MOLDING DEVICE, AND PROGRAM**

(57) A control method for a lamination molding device that molds a molded object by laminating weld beads with a welding torch, the method including: a step of acquiring a planned value of a width of a gap formed by a plurality of weld beads from a lamination plan related to a process of molding the molded object; a step of measuring a plurality of shape profiles respectively corresponding to the plurality of weld beads laminated on the basis of the lamination plan; a step of deriving an actual value of the width of the gap on the basis of the plurality of shape profiles; and a step of correcting a lamination condition of the plurality of weld beads so as to reduce an amount of deviation between the planned value of the width of the gap and the actual value of the width of the gap.

Fig. 9

START

i = 1 — S501

PERFORM CONTROL TO MOLD i-TH LAYER — S502

S503
i < n ? — NO

YES — S504
RECEIVE SHAPE PROFILE

PERFORM CONTROL TO CLOSE GAP — S510

END

DERIVE GAP WIDTH AND TARGET POSITION OF NEXT LAYER — S505

CORRECT LAMINATION CONDITION TO REDUCE DEVIATION AMOUNT OF GAP WIDTH — S506

CORRECT TARGET POSITION OF NEXT LAYER — S507

UPDATE CONTROL PROGRAM — S508

i = i + 1 — S509

EP 4 755 561 A1

**Description**

TECHNICAL FIELD

The present disclosure relates to a control method for a lamination molding device, a control device for a lamination molding device, and a program.

BACKGROUND ART

Patent Document 1 describes an automatic multilayer welding device including: a first control unit that causes a groove information detection unit using an optical sensor, an arc voltage, or the like to detect a weld bead width, stores a result of the detection, and controls a welding condition on the basis of the weld bead width; and a second control unit that detects and stores an arc voltage during welding and controls the welding condition on the basis of a difference voltage from the arc voltage or a predetermined reference voltage, in which the automatic multilayer welding device is configured to control the welding condition so that a predetermined bead lamination height is obtained.

PRIOR ART DOCUMENT

PATENT DOCUMENT

Patent Document 1: JP-A-2000-033477

SUMMARY OF THE INVENTION

PROBLEM TO BE SOLVED BY THE INVENTION

When a molded object in which a plurality of weld beads form a gap is molded, the width of the gap cannot be kept within an appropriate range by adopting a configuration in which the lamination condition is corrected only from the viewpoint of the lamination height of the weld beads.

An object of the present disclosure is to keep the width of a gap within an appropriate range when molding a molded object in which a plurality of weld beads form the gap.

SOLUTIONS TO THE PROBLEM

To achieve this object, the present disclosure provides a control method for a lamination molding device that molds a molded object by laminating weld beads with a welding torch, the method including: a step of acquiring a planned value of a width of a gap formed by a plurality of weld beads from a lamination plan related to a process of molding the molded object; a step of measuring a plurality of shape profiles respectively corresponding to the plurality of weld beads laminated on the basis of the lamination plan; a step of deriving an actual value of the width of the gap on the basis of the plurality of shape profiles; and a step of correcting a lamination condition of the plurality of weld beads so as to reduce an amount of deviation between the planned value of the width of the gap and the actual value of the width of the gap.

In the deriving step, a distance between specific positions of the shape profiles of the plurality of shape profiles may be derived as the actual value of the width of the gap. In this case, the specific position may be a distal end position protruding in a direction of the gap of each shape profile of the plurality of shape profiles.

In the deriving step, a distal end position protruding in the direction of the gap of each weld bead of the plurality of weld beads may be estimated from a specific position of each shape profile of the plurality of shape profiles, and a distance between the distal end positions may be derived as an actual value of the width of the gap. In this case, the specific position may be a distal end position protruding in a direction of the gap of each shape profile of the plurality of shape profiles.

In the correcting step, the lamination condition may be corrected using a correction formula in which at least one of a proportional term, a differential term, and an integral term according to the amount of deviation may be added to a standard set value of the lamination condition. In this case, in the correcting step, the correction formula in which the integral term is not added to a standard set value of the lamination condition may be switched to the correction formula in which the integral term is added to a standard set value of the lamination condition according to progress of lamination.

In the correcting step, a planned value of a target position when each weld bead of the plurality of weld beads of a next layer is laminated may be corrected to a specific position of each shape profile of the plurality of shape profiles. In this case, the specific position may be a position where the planned value of a target position extended in a lamination direction intersects with each of the shape profiles.

In the correcting step, the correction method for correcting the lamination condition may be switched from the first correction method to the second correction method according to progress of lamination. Then, the first correction method may be a method of correcting the lamination condition so as to reduce the amount of deviation between the planned value of the growth amount of each weld bead of the plurality of weld beads in the lamination direction and the actual value of the growth amount derived on the basis of the shape profile. In addition, the second correction method may be a method of correcting the lamination condition so as to reduce the amount of deviation between the planned value of the width of the gap and the actual value of the width of the gap.

The present disclosure also provides a control device for a lamination molding device that molds a molded object by laminating weld beads with a welding torch, the control device including: an acquisition unit that acquires a planned value of a width of a gap formed by a plurality of weld beads from a lamination plan related to a process of molding the molded object; a measurement unit that measures a plurality of shape profiles respectively corresponding to the plurality of weld beads laminated on the basis of the lamination plan; a derivation unit that derives an actual value of the width of the gap on the basis of the plurality of shape profiles; and a correction unit that corrects a lamination condition of the plurality of weld beads so as to reduce an amount of deviation between the planned value of the width of the gap and the actual value of the width of the gap.

Furthermore, the present disclosure also provides a program for causing a control device for a lamination molding device that molds a molded object by laminating weld beads with a welding torch to achieve: a function of acquiring a planned value of a width of a gap formed by a plurality of weld beads from a lamination plan related to a process of molding the molded object; a function of measuring a plurality of shape profiles respectively corresponding to the plurality of weld beads laminated on the basis of the lamination plan; a function of deriving an actual value of the width of the gap on the basis of the plurality of shape profiles; and a function of correcting a lamination condition of the plurality of weld beads so as to reduce an amount of deviation between the planned value of the width of the gap and the actual value of the width of the gap.

EFFECT OF THE INVENTION

According to the present disclosure, when molding a molded object in which a plurality of weld beads form a gap, the width of the gap can be kept within an appropriate range.

BRIEF DESCRIPTION OF THE DRAWINGS

[Fig. 1] Fig. 1 is a diagram illustrating a schematic configuration example of a metal lamination molding system according to the present embodiment.
[Fig. 2] Fig. 2 is a diagram illustrating a hardware configuration example of a control device according to the present embodiment.
[Fig. 3] Fig. 3 is a diagram illustrating an outline of control by a control device according to a first embodiment.
[Fig. 4] Fig. 4 is a diagram illustrating a functional configuration example of a lamination planning device according to the first embodiment.
[Fig. 5] Fig. 5 is a diagram illustrating a functional configuration example of the control device according to the first embodiment.
[Fig. 6] Fig. 6 is a diagram illustrating an example of a shape profile received by a shape profile reception unit of the control device.
[Fig. 7] Fig. 7 is a diagram illustrating a method of deriving a gap width and a target position by a gap width derivation unit of the control device.
[Fig. 8] Fig. 8 is a flowchart illustrating an operation example of the lamination planning device according to the first embodiment.
[Fig. 9] Fig. 9 is a flowchart showing the contents of molding control processing executed by the control device according to the first embodiment.
[Fig. 10] Fig. 10 is a diagram illustrating an outline of another control by a control device according to a second embodiment.
[Fig. 11] Fig. 11 is a diagram illustrating a functional configuration example of the control device according to the second embodiment.
[Fig. 12] Fig. 12 is a flowchart illustrating the contents of molding control processing executed by the control device according to the second embodiment.

DETAILED DESCRIPTION

Embodiments of the present invention will be described below with reference to the accompanying drawings.

[Configuration of Metal Lamination Molding System]

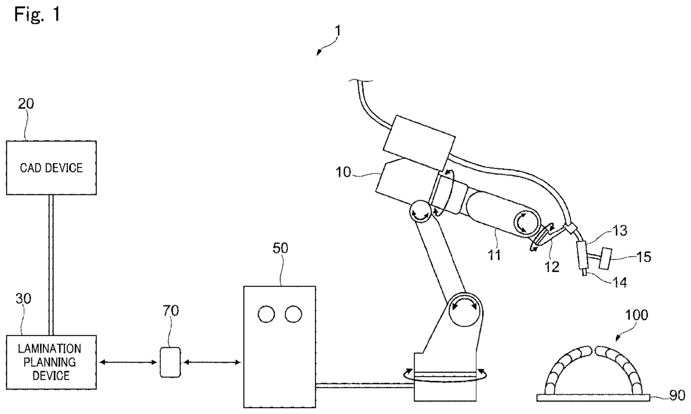

Fig. 1 is a diagram illustrating a schematic configuration example of a metal lamination molding system 1 according to the present embodiment.

As illustrated in the drawing, the metal lamination molding system 1 includes a welding robot (manipulator) 10, a CAD device 20, a lamination planning device 30, and a control device 50. Furthermore, the lamination planning device 30 can write a control program for controlling the welding robot 10 to a removable recording medium 70 such as a memory card, and the control device 50 can read the control program written to the recording medium 70.

The welding robot 10 includes an arm (arm) 11 having a plurality of joints, and performs welding work by operating according to the control program read by the control device 50. Furthermore, the welding robot 10 includes a welding torch 13 for molding a lamination-molded object 100 at the distal end of the arm 11 via a wrist portion 12. Then, in the case of the metal lamination molding system 1, the welding robot 10 moves the welding torch 13 while melting a soft steel filler material (wire) 14 to manufacture the lamination-molded object 100. Specifically, while supplying the filler material 14, the welding torch 13 generates an arc while flowing a shielding gas to melt and solidify the filler material 14, and laminates a plurality of layers of weld beads (hereinafter simply referred to as a "beads") on a base material 90 to manufacture the lamination-molded object 100. Here, an arc is used as a heat source for melting the filler material 14, but a laser or plasma may be used. In addition, the welding robot 10 also includes a feeding device that feeds the filler material 14, and the like, but the description thereof will be omitted. The welding robot 10 is an example of a lamination molding device that molds a molded object by laminating weld beads with a welding torch.

In addition, the welding robot 10 includes a shape measuring instrument 15 at the distal end of the arm 11. The shape measuring instrument 15 measures the shape of the lamination-molded object 100 in the middle of lamination by the welding robot 10. The shape measuring instrument 15 preferably can acquire a shape profile of a cross section of the lamination-molded object 100. As such a shape measuring instrument 15, for example, a shape measuring sensor or the like that acquires a shape profile of a cross section on the basis of reflected light intensity of emitted laser light can be used. The shape measuring instrument 15 is not limited thereto, and alternatively, a shape measuring instrument capable of measuring a three-dimensional shape may be used. However, in the following description, a shape measuring instrument that acquires a shape profile of a cross section on the basis of reflected light intensity of emitted laser light will be used.

The CAD device 20 has a function of designing a molded object using a computer and holding three-dimensional data (hereinafter referred to as "three-dimensional CAD data") obtained by the design.

The lamination planning device 30 creates a lamination plan of the lamination-molded object 100 on the basis of the three-dimensional CAD data held by the CAD device 20. That is, the lamination planning device 30 determines the trajectory of the welding torch 13 and determines the welding condition when the welding robot 10 welds. Then, the lamination planning device 30 generates a control program for controlling the welding robot 10 to form a bead along the determined trajectory under the determined welding condition, and outputs the control program to the recording medium 70.

The control device 50 reads and holds the control program from the recording medium 70. Then, by operating this control program, the control device 50 controls the welding robot 10 to form a bead according to the lamination plan created by the lamination planning device 30, that is, along the trajectory determined by the lamination planning device 30 under the welding condition determined by the lamination planning device 30.

The control device 50 is an example of a control device of the lamination molding device.

[Hardware Configuration of Control Device]

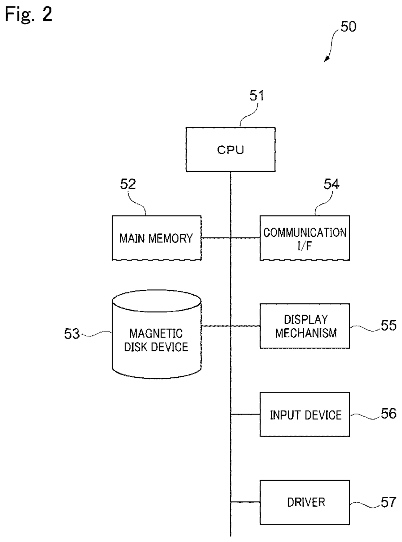

Fig. 2 is a diagram illustrating a hardware configuration example of the control device 50.

As illustrated in the drawing, the control device 50 is implemented by, for example, a general-purpose personal computer (PC) or the like, and includes a CPU 51 as an arithmetic unit, a main memory 52 as a storage unit, and a magnetic disk drive (HDD: hard disk drive) 53. Here, the CPU 51 executes various programs such as an operating system (OS) and application software to implement each function of the control device 50. In addition, the main memory 52 is a storage area for storing various programs, data used for execution thereof, and the like, and the HDD 53 is a storage area for storing input data to the various programs, output data from the various programs, and the like.

Furthermore, the control device 50 includes a communication I/F 54 for communicating with the outside, a display mechanism 55 including a video memory, a display, and the like, an input device 56 such as a keyboard and a mouse, and a driver 57 for reading and writing data from and to the recording medium 70. Note that Fig. 2 merely illustrates a hardware configuration in a case where the control device 50 is implemented by a computer system, and the control device 50 is not limited to the illustrated configuration.

Furthermore, the hardware configuration illustrated in Fig. 2 can also be regarded as a hardware configuration of the lamination planning device 30. Note, however, that when the lamination planning device 30 is described, the CPU 51, the main memory 52, the magnetic disk device 53, the communication I/F 54, the display mechanism 55, the input device 56, and the driver 57 in Fig. 2 are respectively referred to as a CPU 31, a main memory 32, a magnetic disk device 33, a communication I/F 34, a display mechanism 35, an input device 36, and a driver 37.

[Background and Outline of Present Embodiment]

In the metal lamination molding system 1, the control device 50 controls the welding robot 10 to perform lamination welding on the basis of the lamination plan created by the lamination planning device 30. However, even if the lamination welding is performed on the basis of the lamination plan as described above, the amount of welding to be laminated is not constant every time and deviates from the plan due to individual differences of the welding power supply and the device, a subtle difference in diameter depending on the lot of the filler material 14, and the like. For example, a case will be considered in which left and right lamination-molded objects 100 are formed by laminating and molding a flow path having a cavity from the left and right, and the left and right lamination-molded objects 100 are finally closed and completed. In this case, if the gap width between the left and right lamination-molded objects 100 exceeds the reference range, there are many problems such as occurrence of melting and sagging, insufficient penetration due to no generation of back waves, and insufficient strength.

In the present embodiment, the gap width is controlled to fall within the target numerical range in order to stably perform the closing welding having the back wave without a defect in the final welding for the lamination-molded object 100 such as a flow path having a cavity shape molded by laminating beads symmetrically.

In the present embodiment, the lamination of flow paths having a circular arch-shaped cross section will be described as an example of the lamination of the lamination-molded object 100, but the invention is not limited thereto. The present embodiment can be widely applied to lamination of a material having another cross-sectional shape such as a square pipe, a material having a specified interval in a shape in a structure, and the like. That is, the present embodiment can be applied to the lamination-molded object 100 in which two independent beads form a gap. Alternatively, the number of independent beads need not be two, and the present embodiment can be said to be applicable to the lamination-molded object 100 in which a plurality of independent beads form a gap. In the following description, it is assumed that the lamination-molded object 100 includes n layers.

[First Embodiment]

(Outline)

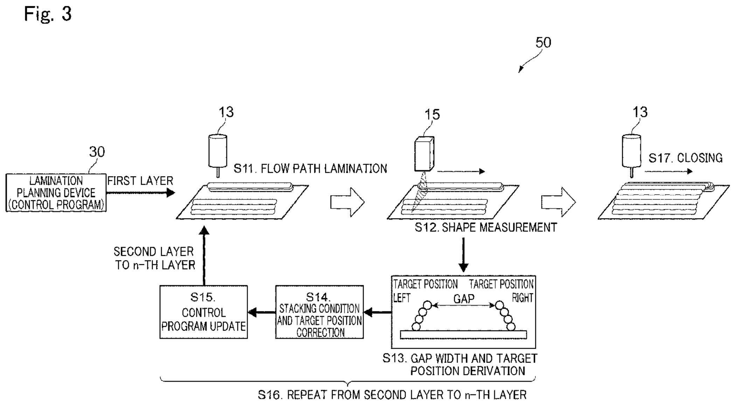

Fig. 3 is a diagram illustrating an outline of control by a control device 50 according to a first embodiment.

As illustrated in the drawing, first, the control device 50 causes a welding robot 10 to execute a control program acquired from a lamination planning device 30, and shapes the first layer of a flow path by a welding torch 13 (S11).

Next, the control device 50 measures the shape of the cross section of the first layer of the flow path by a shape measuring instrument 15, and acquires a shape profile which is a measurement result of the shape of the cross section (S12).

Next, the control device 50 derives a gap width of a designated portion and a target position of the next layer from the shape profile acquired in S12 (S13).

Next, the control device 50 compares the planned value with the value derived in S13 for the gap width and the target position, and corrects the lamination condition and the target position on the basis of the comparison result (S14).

Next, the control device 50 updates the control program on the basis of the lamination condition and the target position corrected in S14 (S15).

Thereafter, the control device 50 repeats S11 to S15 from the second layer to the n-th layer (S16). At this time, in S11, the control device 50 causes the welding robot 10 to execute the control program updated in S15. In the drawings, for convenience, steps S12 to S15 are also executed for the n-th layer. However, since the n-th layer of the flow path is molded and then closed, strictly speaking, steps S12 to S15 need not be performed for the n-th layer.

Finally, the control device 50 causes the welding robot 10 to laminate the closing beads for closing the gap, and laminates the closing beads by the welding torch 13 (S17).

(Functional configuration of lamination planning device)

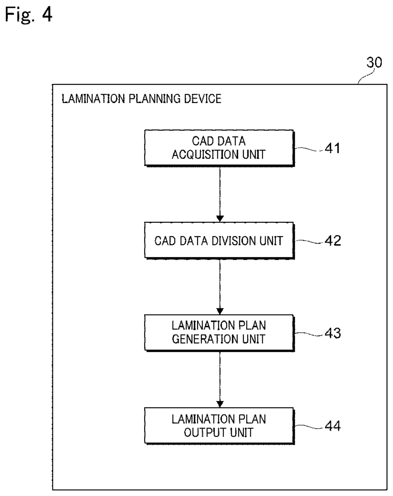

Fig. 4 is a diagram illustrating a functional configuration example of the lamination planning device 30 according to the first embodiment. As illustrated in the drawing, the lamination planning device 30 according to the first embodiment includes a CAD data acquisition unit 41, a CAD data division unit 42, a lamination plan generation unit 43, and a lamination plan output unit 44.

The CAD data acquisition unit 41 acquires three-dimensional CAD data representing the three-dimensional shape of a lamination-molded object 100 from a CAD device 20.

The CAD data division unit 42 divides (slices) the three-dimensional CAD data acquired by the CAD data acquisition unit 41 into a plurality of layers to generate a plurality of pieces of layer shape data each representing the shape of each layer. At that time, the CAD data division unit 42 may convert the three-dimensional CAD data into an internal format that can be easily divided into a plurality of layers.

The lamination plan generation unit 43 generates a lamination plan including welding conditions and target positions when welding beads matching the height and width of each layer of a plurality of pieces of layer shape data generated by the CAD data division unit 42. In order to generate such a lamination plan, in addition to the height and width of the bead, a model that approximates the cross-sectional shape of the bead is required. These may be estimated by calculation from an actual measurement value of a measurement experiment or a cross-sectional area of the amount of welded metal. In the present embodiment, bead-on-plate welding and vertical lamination of several layers are performed while changing the welding amount by changing the welding speed and the wire feeding speed under several conditions, and the results of measuring the height and width per layer under each condition are stored in a database. Then, a welding speed and a welding amount that satisfy a desired height and width for lamination are selected at the time of lamination, an estimated shape of each layer is calculated as needed from the measurement result, and a target position is determined. Note that the calculation method of the welded cross section may be changed depending on the material of the filler material 14 or the state of the shape of the already laminated portion. The lamination including the molded object is planned by this calculation method.

The lamination plan output unit 44 outputs the lamination plan generated by the lamination plan generation unit 43 to a recording medium 70.

(Functional configuration of control device)

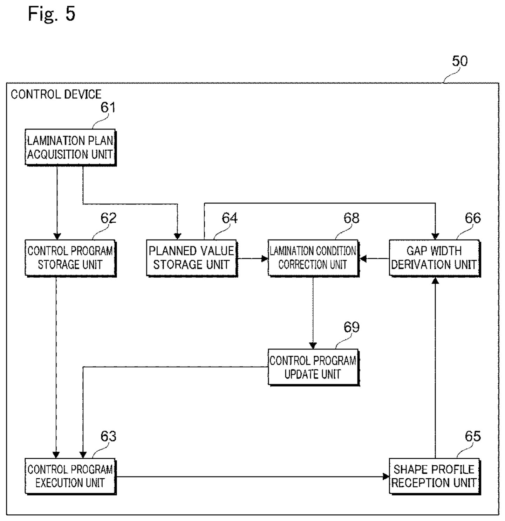

Fig. 5 is a diagram illustrating a functional configuration example of the control device 50 according to the first embodiment. As illustrated in the drawing, the control device 50 according to the first embodiment includes a lamination plan acquisition unit 61, a control program storage unit 62, a control program execution unit 63, a planned value storage unit 64, a shape profile reception unit 65, a gap width derivation unit 66, a lamination condition correction unit 68, and a control program update unit 69.

The lamination plan acquisition unit 61 acquires the lamination plan recorded in the recording medium 70.

Here, the lamination plan may include a control program for controlling the welding robot 10. In addition, the lamination plan may include planned values such as a target position at which the welding robot 10 laminates the beads, a welding speed, a feeding speed (hereinafter, simply referred to as a "feeding speed") of the filler material 14, a welding current, a welding voltage, a posture of the welding torch 13, and an order of laminating the beads. Furthermore, the lamination plan may include at least one planned value of shape information of the lamination-molded object 100, a height or a width of the bead, and an accumulated value of a width or a height of the bead in the middle of lamination. Furthermore, the lamination plan may include a planned shape profile. As will be described later, a planned value of the gap width between the beads is identified by the planned shape profile.

Then, the lamination plan acquisition unit 61 extracts the control program and the planned value from the lamination plan.

In the present embodiment, the lamination plan acquisition unit 61 is provided as an example of an acquisition unit that acquires a planned value of the width of the gap formed by the plurality of weld beads from the lamination plan regarding the process of molding the molded object.

The control program storage unit 62 stores the control program extracted from the lamination plan by the lamination plan acquisition unit 61.

The control program execution unit 63 executes the control program stored in the control program storage unit 62 or the control program updated by the control program update unit 69. As a result, the control program execution unit 63 controls the welding robot 10 to form a bead according to the lamination plan generated by the lamination plan generation unit 43 or the lamination plan corrected thereafter.

Specifically, the control program execution unit 63 controls the welding robot 10 so as to form beads from the first layer to the n-th layer.

Thereafter, the control program execution unit 63 controls the welding robot 10 to close the open gap. When the bead of each layer is formed, each functional unit to be described later limits the gap width within a predetermined range, so that the welding robot 10 can stably close the gap. Note that when the gap is closed, the control program execution unit 63 may perform control different from that when the beads from the first layer to the n-th layer are formed. In particular, since it is necessary to obtain sufficient penetration for sufficiently fusing the closing bead with the beads at both ends of the gap, the control program execution unit 63 may perform control to adjust the amount of heat input according to the shape of the opening. Here, as the control for adjusting the amount of heat input, the control program execution unit 63 may perform control for adjusting the mixing ratio of a mixed shielding gas in addition to the welding current and the welding voltage.

The planned value storage unit 64 stores the planned value extracted from the lamination plan by the lamination plan acquisition unit 61.

The shape profile reception unit 65 receives, from the shape measuring instrument 15, the shape profile of the cross section of the lamination-molded object 100 laminated by the control program execution unit 63 executing the control program. Here, when a plurality of independent beads form a gap in the lamination-molded object 100, the shape profile includes a plurality of shape profile portions respectively corresponding to the plurality of independent beads.

In the present embodiment, the shape profile reception unit 65 is provided as an example of a measurement unit that measures a plurality of shape profiles corresponding to a plurality of weld beads laminated on the basis of the lamination plan.

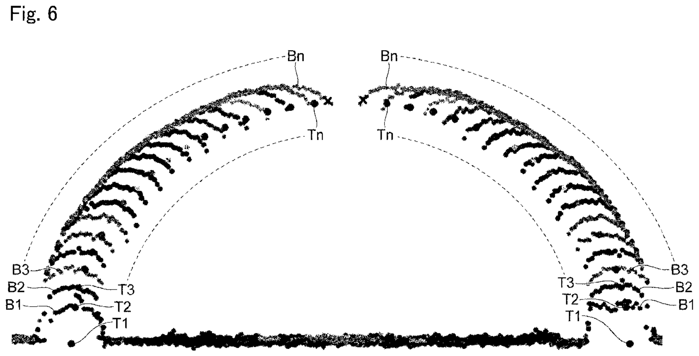

Fig. 6 illustrates an example of the shape profile received by the shape profile reception unit 65. By updating the shape profile in accordance with the progress of lamination as illustrated, it is possible to grasp the transition of the lamination shape from the shape profile. In addition, by arranging target positions T1, T2,..., Tn corresponding to beads B1, B2,..., Bn laminated in the shape profile in an overlapping manner as illustrated, the positional relationship between the shape of the bead and the target position can be compared.

The gap width derivation unit 66 derives the gap width and the target position of the next layer on the basis of the shape profile received by the shape profile reception unit 65 and the planned value stored in the planned value storage unit 64.

When the shape profile reception unit 65 receives the shape profile as illustrated in Fig. 6, curved bead walls exist on the left and right sides of the shape profile. Therefore, the gap width derivation unit 66 derives the distance between the beads located at the top of the bead walls as the gap width.

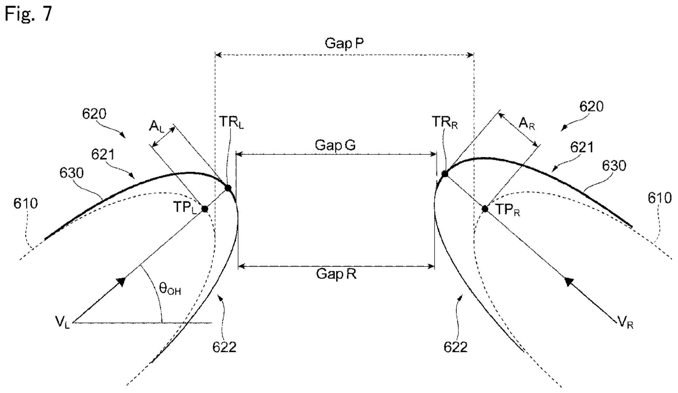

Fig. 7 illustrates a method of deriving the gap width in this case. In Fig. 7, a planned shape profile 610 is indicated by a broken line, and an actual shape profile 620 is indicated by a solid line. In addition, a planned value of the gap width obtained from the planned shape profile 610 is Gap P, and actual values of the gap width obtained from the actual shape profile 620 are Gap G and Gap R. In a shape profile (hereinafter referred to as "sensor profile 630") obtained using laser light, there may be a case where information can be obtained only up to a part of the actual shape as indicated by a thick solid line.

In this case, Gap G, which is the apparent closest distance between the beads, may be different from Gap R, which is the actual closest distance between the beads. It is preferable to grasp Gap R in a case where closing or the like of the roof of the flow path is planned. Therefore, the gap width derivation unit 66 may estimate Gap R from Gap G, for example. Specifically, the gap width derivation unit 66 may convert Gap G into Gap R by obtaining an offset value based on the relationship between Gap G and Gap R from a simple test specimen or the like. Alternatively, the gap width derivation unit 66 may estimate Gap R by inputting Gap G to a model obtained by machine learning the relationship between Gap G and Gap R obtained from the simple test specimen. Note that the gap width derivation unit 66 may use a specific position on the sensor profile 630 when deriving Gap G, but it is preferable to set a distal end position protruding farthest in the gap width direction on the sensor profile 630 as the specific position. In Fig. 7, the distal end position may be a point at the boundary between a range 621 in which the sensor profile 630 indicated by a thick solid line has been acquired and a range 622 in which the sensor profile 630 indicated by a thin solid line has not been acquired. Furthermore, new target positions TRR and TRL to be described later may be regarded as the distal end position, and the distal end position may be extracted in consideration of the acquisition range of the sensor profile 630, for example.

In the present embodiment, this function of the gap width derivation unit 66 is provided as an example of a derivation unit that derives the actual value of the width of the gap on the basis of a plurality of shape profiles.

Furthermore, in the present embodiment, this function of the gap width derivation unit 66 is provided as an example of a derivation unit that derives the distance between specific positions of the shape profiles of the plurality of shape profiles as the actual value of the width of the gap.

Furthermore, in the present embodiment, this function of the gap width derivation unit 66 is provided as an example of a derivation unit that estimates a distal end position protruding in the direction of the gap of each weld bead of the plurality of weld beads from a specific position of each shape profile of the plurality of shape profiles, and derives a distance between the distal end positions as an actual value of the width of the gap.

In addition, when the target position of the next layer is set at a position away from the surface of the bead, there is a possibility that a defect of generation of an arc or a defect of a layer shape is caused. Therefore, the gap width derivation unit 66 also derives a target position of the next layer.

Fig. 7 also illustrates a method of deriving a target position in this case. The gap width derivation unit 66 derives, as new target positions TRR and TRL, points at which planned target positions TPR and TPL extended in VR and VL directions intersect the sensor profile 630, the VR and VL directions being lamination directions at overhang angles $\theta OH$. When the sensor profile 630 does not intersect the VR and VL directions, the target position of the next layer may be derived from a shape profile obtained by complementing with a predetermined bead shape model.

The lamination condition correction unit 68 compares the actual value of the gap width and the new target position derived by the gap width derivation unit 66 with the planned gap width and target position stored in the planned value storage unit 64.

Specifically, the lamination condition correction unit 68 calculates an amount of deviation ε by comparing the planned value of the gap width stored in the planned value storage unit 64 with the actual value of the gap width derived by the gap width derivation unit 66. Here, the actual value of the gap width may be a value (e.g., Gap G) directly obtained from the sensor profile, or may be a value (e.g., Gap R) obtained by estimation based on the sensor profile. The lamination condition correction unit 68 corrects the lamination condition of the bead to be laminated next using the correction amount corresponding to the calculated amount of deviation ε. For example, assuming that the next layer to be targeted is k layer, the amount of deviation at that time is εk, and the amount of change in the amount of deviation from the previous time is Δεk, the lamination condition correction unit 68 may correct a welding speed WeldVk by the correction amount shown in the following Equation (1).

[Mathematical formula 1]

$$WeldV_k = WeldV_{\text{Standard}}(\theta_{OH}, \varphi) + Kp(\theta_{OH})\varepsilon_k + Kd\Delta\varepsilon_k + Ki\sum_{i=m}^{k}\varepsilon_i \qquad (1)$$

$\theta_{OH}$... define direction angle for growing weld bead as overhand angle
$\varphi$... vertical advance angle of welding line
WeldV standard ($\theta_{OH}$, $\varphi$)... design welding speed determined from $\theta_{OH}$, $\varphi$
Kp ($\theta_{OH}$) ... P gain of speed relative to target gap determined by overhang angle
Kd... D gain of speed, gain of vibration suppression term with respect to change
Ki... I gain of speed, I gain of term that absorbs difference due to steady deviation such as characteristics of devices and power supply

Equation (1) is a PID control equation, in which Kp represents a proportional gain, Kd represents a differential gain, Ki represents an integral gain, θOH represents an overhang angle, and φ represents an inclination angle of the welding torch 13 with respect to a horizontal plane. In Equation (1), the standard set value of the welding speed is corrected on the basis of the overhang angle θOH and the inclination angle φ of the welding torch 13, and the corrected welding speed is further corrected by the correction term depending on the amount of deviation ε of the width. Note that not all the second to fourth terms on the right side of Equation (1) are necessarily provided. It suffices that at least one of the second to fourth terms is provided. Moreover, addition or omission of a term may be performed according to the progress of lamination. For example, the fourth term on the right side of Equation (1) may be added from the m-th layer which is a middle layer. In this case, the value of m may be adjusted according to the convergence of the amount of deviation ε. Furthermore, the gains Kp, Kd, Ki may be adjusted according to the condition of the bead to be laminated, such as the overhang angle θOH. In Equation (1), the gain Kp is corrected on the basis of the overhang angle θOH. This is because the contribution in the gap width direction varies depending on the overhang angle θOH even if the weld amount of the bead is the same as illustrated in Fig. 7. In this manner, the lamination condition correction unit 68 corrects the welding speed by Equation (1), but may correct the feeding speed by an equation similar to Equation (1).

In the present embodiment, this function of the lamination condition correction unit 68 is provided as an example of a correction unit that corrects the lamination condition of a plurality of weld beads so as to reduce the amount of deviation between the planned value of the width of the gap and the actual value of the width of the gap.

In the present embodiment, Equation (1) is used as an example of a correction formula obtained by adding at least one of a proportional term, a differential term, and an integral term according to an amount of deviation to a standard set value of a lamination condition. Then, in the present embodiment, this function of the lamination condition correction unit 68 is provided as an example of a correction unit that corrects the lamination condition using the correction formula.

Furthermore, in the present embodiment, this function of the lamination condition correction unit 68 is provided as an example of a correction unit that switches a correction formula in which the integral term is not added to the standard set value of the lamination condition to a correction formula in which the integral term is added to the standard set value of the lamination condition according to the progress of the lamination.

In addition, the lamination condition correction unit 68 compares the planned target position stored in the planned value storage unit 64 with the new target position derived by the gap width derivation unit 66 on the shape profile. At that time, the lamination condition correction unit 68 calculates distances AR and AL between the planned target positions TPR and TPL and the new target positions TRR and TRL (see Fig. 7). Here, the new target positions TRR and TRL may be specific positions on the sensor profile 630. However, as described above, the specific positions are preferably positions at which the planned target positions TPR and TPL extended in the VR and VL directions intersect the sensor profile 630, the VR and VL directions being lamination directions at the overhang angles θOH. Then, the lamination condition correction unit 68 updates the target position instructed to the welding robot 10 to the new target positions TRR and TRL by a correction vector that is a correction amount using the distances AR and AL between the target positions in the following Equation (2).

[Mathematical formula 2]

$$\text{Correction vector} \, V_p = A_j V_j \quad (j = R, L) \tag{2}$$

Here, Vj is a unit vector in a direction from the target position of the current layer to the target position of the next layer. Note, however, that the angle formed by Vj and the horizontal plane is an acute angle. If such a target position is not updated, an arc is not correctly generated at the distal end of the laminated bead, the arc becomes unstable, an error occurs in the welding power supply, and the device may stop.

In the present embodiment, this function of the lamination condition correction unit 68 is provided as an example of a correction unit that corrects a planned value of a target position when each of a plurality of weld beads of a next layer is laminated to a specific position of each shape profile of a plurality of shape profiles.

The control program update unit 69 updates the control program with the correction amount obtained by the lamination condition correction unit 68. The beads to be updated are beads at both ends forming the gap. In particular, when the welding amount is adjusted independently, the shapes of the left and right beads tend to be unbalanced (asymmetric), and thus, the correction amount of the welding speed or the feeding speed derived from Equation (1) is applied to the lamination of the beads at both ends of the gap. On the other hand, the correction amount of the target position may be individually adjusted on the left side and the right side of the gap. For example, when the filler material 14 is bent in a predetermined direction from the distal end of the welding torch 13, the way of providing the offset value according to the bending direction may be different between the beads laminated on the left of the gap and the beads laminated on the right of the gap.

Note that the control program update unit 69 may also correct the posture and the like of the welding robot 10 along with the correction of the target position and the welding amount.

(Operation of lamination planning device)

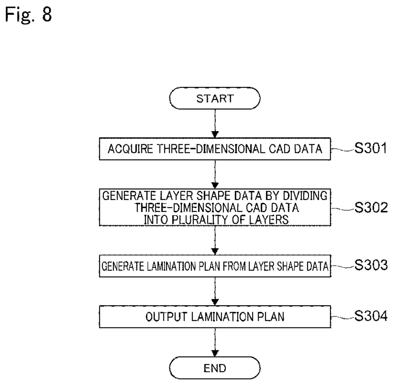

Fig. 8 is a flowchart illustrating an operation example of the lamination planning device 30 according to the first embodiment.

As illustrated in the drawing, in the lamination planning device 30, first, the CAD data acquisition unit 41 acquires three-dimensional CAD data from the CAD device 20 (step 301).

Next, the CAD data division unit 42 divides the three-dimensional CAD data acquired in step 301 into a plurality of layers to generate layer shape data (step 302).

Next, the lamination plan generation unit 43 generates a lamination plan from the layer shape data generated in step 302 (step 303).

Next, the lamination plan output unit 44 outputs the lamination plan generated in step 303 to the recording medium 70 (step 304).

(Operation of control device)

In the control device 50, first, the lamination plan acquisition unit 61 acquires a lamination plan from a recording medium 70, and stores a control program included in the lamination plan in the control program storage unit 62 and a planned value included in the lamination plan in the planned value storage unit 64. Then, the control program execution unit 63 reads and executes the control program stored in the control program storage unit 62 to start the execution of the molding control processing according to the first embodiment.

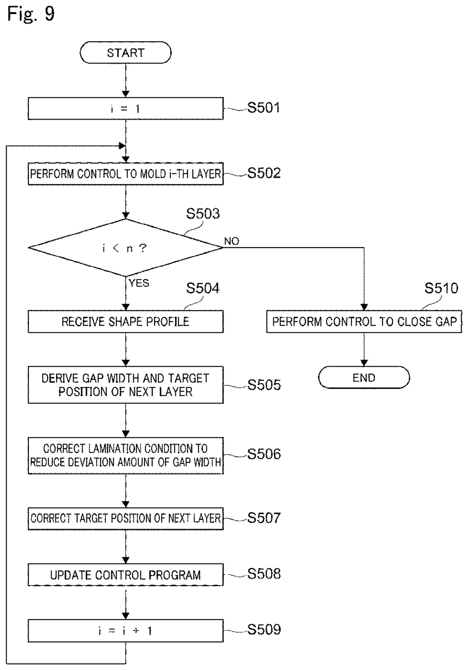

Fig. 9 is a flowchart illustrating the contents of such molding control processing.

As illustrated in the drawing, first, the control program execution unit 63 sets an index i of the layer to 1 (step 501).

Next, the control program execution unit 63 performs the following processing for each index i while increasing the index i of the layer by 1 to the number of layers n.

That is, the control program execution unit 63 controls the welding robot 10 to mold the i-th layer of the lamination-molded object 100 (step 502).

Next, the control program execution unit 63 determines whether the index i of the layer has reached the number of layers n (step 503).

As a result, if it is determined that the index i of the layer has not reached the number of layers n, the shape profile reception unit 65 receives a shape profile from the shape measuring instrument 15 (step 504).

Next, the gap width derivation unit 66 derives an actual value of the gap width and a new target position of the next layer on the basis of the planned value stored in the planned value storage unit 64 and the shape profile received in step 504 (step 505).

Next, the lamination condition correction unit 68 compares the planned value of the gap width stored in the planned value storage unit 64 with the actual value of the gap width derived in step 505, and corrects the lamination condition so as to reduce the amount of deviation (step 506). Specifically, the lamination condition correction unit 68 obtains a correction amount corresponding to the amount of deviation and corrects the lamination condition by the correction amount.

Next, the lamination condition correction unit 68 compares the planned value of the target position of the next layer stored in the planned value storage unit 64 with the new target position of the next layer derived in step 505, and corrects the target position of the next layer (step 507). Specifically, the lamination condition correction unit 68 obtains a correction amount related to the target position and corrects the target position by the correction amount.

Next, the control program update unit 69 updates the control program being executed by the control program execution unit 63 on the basis of the correction amount obtained in step 506 and step 507 (step 508).

Thereafter, the control program execution unit 63 adds 1 to the index i of the layer (step 509), and returns the processing to step 502.

On the other hand, if it is determined that the index i of the layer has reached the number of layers n, the control program execution unit 63 controls the welding robot 10 to close the gap (step 510), and ends the processing.

(Effects)

In the first embodiment, when a molded object in which a plurality of weld beads form a gap is molded, a condition for laminating the plurality of weld beads is corrected so that an amount of deviation between a planned value and an actual value of the width of the gap becomes small. As a result, the width of the gap can be kept within an appropriate range.

[Second Embodiment]

(Outline)

The control by the control device 50 according to the first embodiment may be combined with other controls. For example, in a second embodiment, the control by the gap width according to the first embodiment is combined with control by the bead growth amount (hereinafter simply referred to as "growth amount").

For example, in a lamination-molded object 100 having a circular arch shape, since the layer responsible for most of the height of the lamination-molded object 100 is the first half layer (1st, 2nd, 3rd,..., m-1th layer), it is preferable to control the growth amount from the viewpoint of managing the lamination height in the first half layer. In the latter layer (m, m+1,..., n-th layer), the increase amount of the lamination height is small even if the number of layers increases, and the interval between left and right beads changes more greatly for each layer than the lamination height. Therefore, it is possible to adjust the interval between the bead walls to an appropriate amount by regarding the interval between left and right beads as the gap width and switching to control by the gap width, and it is easy to ensure the quality of the closing beads. On the other hand, if the interval between the bead walls is not an appropriate amount, there is a possibility that defects such as poor formation of a back wave bead and perforation due to weld metal penetration may occur.

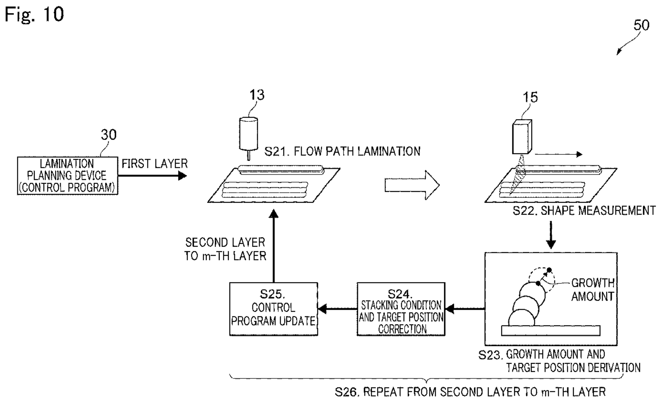

Fig. 10 is a diagram illustrating an outline of another control by a control device 50 according to the second embodiment.

As illustrated in the drawing, first, the control device 50 causes a welding robot 10 to execute a control program acquired from a lamination planning device 30, and molds the first layer of a flow path by a welding torch 13 (S21).

Next, the control device 50 measures the shape of the cross section of the first layer of the flow path by a shape measuring instrument 15, and acquires a shape profile which is a measurement result of the shape of the cross section (S22).

Next, the control device 50 derives a growth amount and the target position of the next layer from the shape profile acquired in S22 (S23).

Next, the control device 50 compares the planned value with the value derived in S23 for the growth amount and the target position, and corrects the lamination condition and the target position on the basis of the comparison result (S24).

Next, the control device 50 updates the control program on the basis of the lamination condition and the target position corrected in S24 (S25).

Thereafter, the control device 50 repeats S21 to S25 from the second layer to the m-th layer (S26). At this time, in S21, the control device 50 causes the welding robot 10 to execute the control program updated in S25. In the drawings, for convenience, steps S22 to S25 are also executed for the m-th layer. However, since control based on the gap width is performed after the m-th layer of the flow path is molded, strictly speaking, steps S12 to S15 in Fig. 3 may be executed for the m-th layer instead of steps S22 to S25.

(Functional configuration of lamination planning device)

Since the functional configuration example of the lamination planning device 30 according to the second embodiment is similar to the functional configuration example of the lamination planning device 30 according to the first embodiment, the description thereof will be omitted.

(Functional configuration of control device)

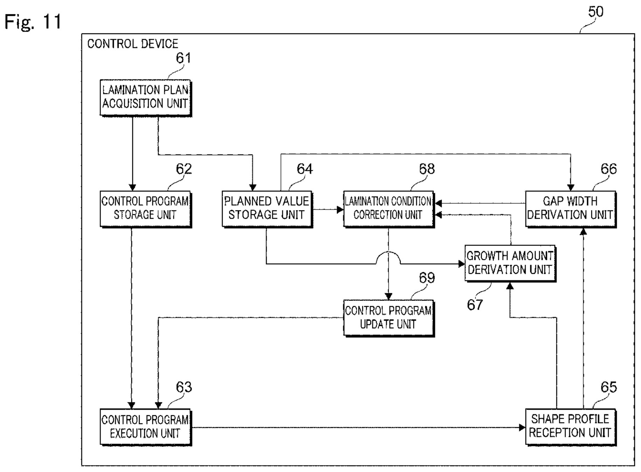

Fig. 11 is a diagram illustrating a functional configuration example of the control device 50 according to the second embodiment. As illustrated in the drawing, the control device 50 according to the second embodiment includes a lamination plan acquisition unit 61, a control program storage unit 62, a control program execution unit 63, a planned value storage unit 64, a shape profile reception unit 65, a gap width derivation unit 66, a growth amount derivation unit 67, a lamination condition correction unit 68, and a control program update unit 69.

The lamination plan acquisition unit 61, the control program storage unit 62, the control program execution unit 63, the planned value storage unit 64, the shape profile reception unit 65, and the gap width derivation unit 66 are similar to those of the first embodiment, and thus, description thereof is omitted.

The growth amount derivation unit 67 derives the growth amount and the target position of the next layer on the basis of the shape profile received by the shape profile reception unit 65 and the planned value stored in the planned value storage unit 64.

The lamination condition correction unit 68 performs the following operation for the first to m-1 th layer. That is, the lamination condition correction unit 68 compares the actual value of the growth amount and the new target position derived by the growth amount derivation unit 67 with the planned growth amount and target position stored in the planned value storage unit 64. Then, the lamination condition correction unit 68 updates the lamination condition by an equation similar to Equation (1), where $\varepsilon$ is the amount of deviation between the planned value of the growth amount stored in the planned value storage unit 64 and the actual value of the growth amount derived by the growth amount derivation unit 67. In addition, the lamination condition correction unit 68 updates the target position of the next layer by the same equation as Equation (2).

In the present embodiment, this function of the lamination condition correction unit 68 is provided as an example of a correction unit that executes a first correction method that is a method of correcting the lamination condition so as to reduce the amount of deviation between the planned value of the growth amount of each weld bead of the plurality of weld beads in the lamination direction and the actual value of the growth amount derived on the basis of the shape profile.

The lamination condition correction unit 68 performs the same operation as in the first embodiment for the m-th layer to the n-th layer.

In the present embodiment, this function of the lamination condition correction unit 68 is provided as an example of a correction unit that executes a second correction method of correcting the lamination condition so as to reduce the amount of deviation between the planned value of the width of the gap and the actual value of the width of the gap.

Furthermore, in the present embodiment, the lamination condition correction unit 68 is provided as an example of a correction unit that switches the correction method for correcting the lamination condition from the first correction method to the second correction method according to the progress of the lamination.

Since the control program update unit 69 is similar to that of the first embodiment, the description thereof is omitted.

(Operation of lamination planning device)

An operation example of the lamination planning device 30 according to the second embodiment is similar to the operation example of the lamination planning device 30 according to the first embodiment, and thus description thereof is omitted.

(Operation of control device)

In the control device 50, first, the lamination plan acquisition unit 61 acquires a lamination plan from a recording medium 70, and stores a control program included in the lamination plan in the control program storage unit 62 and a planned value included in the lamination plan in the planned value storage unit 64. Then, the control program execution unit 63 reads and executes the control program stored in the control program storage unit 62 to start the execution of the molding control processing according to the second embodiment.

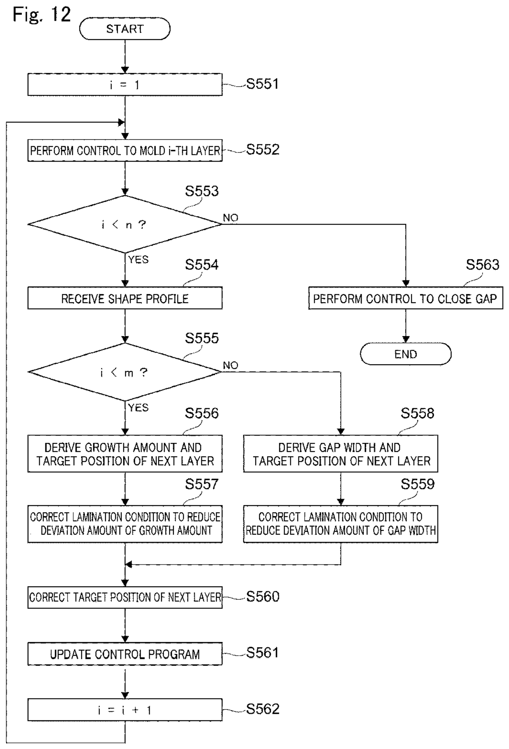

Fig. 12 is a flowchart illustrating the contents of such molding control processing.

As illustrated in the drawing, first, the control program execution unit 63 sets an index i of the layer to 1 (step 551).

Next, the control program execution unit 63 performs the following processing for each index i while increasing the index i of the layer by 1 to the number of layers n.

That is, the control program execution unit 63 controls the welding robot 10 to mold the i-th layer of the lamination-molded object 100 (step 552).

Next, the control program execution unit 63 determines whether the index i of the layer has reached the number of layers n (step 553).

As a result, if it is determined that the index i of the layer has not reached the number of layers n, the shape profile reception unit 65 receives a shape profile from the shape measuring instrument 15 (step 554).

Next, the shape profile reception unit 65 determines whether the index i of the layer has reached the number of layers m (step 555).

As a result, if it is determined that the index i of the layer has not reached the number of layers m, the growth amount derivation unit 67 derives an actual value of the growth amount and a new target position of the next layer on the basis of the planned value stored in the planned value storage unit 64 and the shape profile received in step 554 (step 556).

Next, the lamination condition correction unit 68 compares the planned value of the growth amount stored in the planned value storage unit 64 with the actual value of the growth amount derived in step 556, and corrects the lamination condition so as to reduce the amount of deviation (step 557). Specifically, the lamination condition correction unit 68 obtains a correction amount corresponding to the amount of deviation and corrects the lamination condition by the correction amount.

On the other hand, if it is determined that the index i of the layer has reached the number of layers m, the gap width derivation unit 66 derives an actual value of the gap width and a new target position of the next layer on the basis of the planned value stored in the planned value storage unit 64 and the shape profile received in step 554 (step 558).

Next, the lamination condition correction unit 68 compares the planned value of the gap width stored in the planned value storage unit 64 with the actual value of the gap width derived in step 558, and corrects the lamination condition so as to reduce the amount of deviation (step 559). Specifically, the lamination condition correction unit 68 obtains a correction amount corresponding to the amount of deviation and corrects the lamination condition by the correction amount.

Next, the lamination condition correction unit 68 compares the planned value of the target position of the next layer stored in the planned value storage unit 64 with the new target position of the next layer derived in step 556 or step 558, and corrects the target position of the next layer (step 560). Specifically, the lamination condition correction unit 68 obtains a correction amount related to the target position and corrects the target position by the correction amount.

Next, the control program update unit 69 updates the control program being executed by the control program execution unit 63 on the basis of the correction amount obtained in step 557 and step 560 or step 559 and step 560 (step 561).

Thereafter, the control program execution unit 63 adds 1 to the index i of the layer (step 562), and returns the processing to step 552.

On the other hand, if it is determined that the index i of the layer has reached the number of layers n, the control program execution unit 63 controls the welding robot 10 to close the gap (step 563), and ends the processing.

(Effects)

In the second embodiment, when a molded object in which a plurality of weld beads form a gap is molded, the condition for laminating the plurality of weld beads is corrected so that the amount of deviation between the planned value and the actual value of the growth amount becomes small in the first half and the amount of deviation between the planned value and the actual value of the gap width becomes small in the second half. Thus, the width of the gap can be kept within an appropriate range while satisfying the height and width of the molded object.

This application claims priority based on Japanese Patent Application No. 2023-216840 filed on December 22, 2023. Japanese Patent Application No. 2023-216840 is incorporated herein by reference.

The present disclosure may include the following aspects.

(Aspect 1)

A control method for a lamination molding device that molds a molded object by laminating weld beads with a welding torch, the method comprising:

a step of acquiring a planned value of a width of a gap formed by a plurality of weld beads from a lamination plan related to a process of molding the molded object;

a step of measuring a plurality of shape profiles respectively corresponding to the plurality of weld beads laminated on the basis of the lamination plan;

a step of deriving an actual value of the width of the gap on the basis of the plurality of shape profiles; and

a step of correcting a lamination condition of the plurality of weld beads so as to reduce an amount of deviation between the planned value of the width of the gap and the actual value of the width of the gap.

(Aspect 2)

The control method for a lamination molding device according to aspect 1, in which in the deriving step, a distance between specific positions of the shape profiles of the plurality of shape profiles is derived as the actual value of the width of the gap.

(Aspect 3)

The control method for a lamination molding device according to aspect 2, in which the specific position is a distal end position protruding in a direction of the gap of each shape profile of the plurality of shape profiles.

(Aspect 4)

The control method for a lamination molding device according to any one of aspects 1 to 3, in which in the deriving step, a distal end position protruding in a direction of the gap of each weld bead of the plurality of weld beads is estimated from a specific position of each shape profile of the plurality of shape profiles, and a distance between the distal end positions is derived as the actual value of the width of the gap.

(Aspect 5)

The control method for a lamination molding device according to aspect 4, in which the specific position is a distal end position protruding in a direction of the gap of each shape profile of the plurality of shape profiles.

(Aspect 6)

The control method for a lamination molding device according to any one of aspects 1 to 5, in which in the correcting step, the lamination condition is corrected using a correction formula in which at least one of a proportional term, a differential term, and an integral term according to the amount of deviation is added to a standard set value of the lamination condition.

(Aspect 7)

The control method for a lamination molding device according to aspect 6, in which in the correcting step, the correction formula in which the integral term is not added to a standard set value of the lamination condition is switched to the correction formula in which the integral term is added to a standard set value of the lamination condition according to progress of lamination.

(Aspect 8)

The control method for a lamination molding device according to any one of aspects 1 to 7, in which in the correcting step, a planned value of a target position when each weld bead of the plurality of weld beads of a next layer is laminated is corrected to a specific position of each shape profile of the plurality of shape profiles.

(Aspect 9)

The control method for a lamination molding device according to aspect 8, in which the specific position is a position where the planned value of a target position extended in a lamination direction intersects with each of the shape profiles.

(Aspect 10)

The control method for a lamination molding device according to aspect 1, in which: in the correcting step, a correction method for correcting the lamination condition is switched from a first correction method to a second correction method according to progress of lamination;

the first correction method is a method for correcting the lamination condition so as to reduce an amount of deviation between a planned value of a growth amount of each weld bead of the plurality of weld beads in a lamination direction and an actual value of the growth amount derived on the basis of the shape profile; and

the second correction method is a method for correcting the lamination condition so as to reduce an amount of deviation between the planned value of the width of the gap and the actual value of the width of the gap.

(Aspect 11)

A control device for a lamination molding device that molds a molded object by laminating weld beads with a welding torch, the control device comprising:

an acquisition unit that acquires a planned value of a width of a gap formed by a plurality of weld beads from a lamination plan related to a process of molding the molded object;

a measurement unit that measures a plurality of shape profiles respectively corresponding to the plurality of weld beads laminated on the basis of the lamination plan;

a derivation unit that derives an actual value of the width of the gap on the basis of the plurality of shape profiles; and

a correction unit that corrects a lamination condition of the plurality of weld beads so as to reduce an amount of deviation between the planned value of the width of the gap and the actual value of the width of the gap.

(Aspect 12)

A program for causing a control device for a lamination molding device that molds a molded object by laminating weld beads with a welding torch to achieve:

a function of acquiring a planned value of a width of a gap formed by a plurality of weld beads from a lamination plan related to a process of molding the molded object;

a function of measuring a plurality of shape profiles respectively corresponding to the plurality of weld beads laminated on the basis of the lamination plan;

a function of deriving an actual value of the width of the gap on the basis of the plurality of shape profiles; and

a function of correcting a lamination condition of the plurality of weld beads so as to reduce an amount of deviation between the planned value of the width of the gap and the actual value of the width of the gap.

REFERENCE SIGNS LIST

| 1 | Metal lamination molding system |
| 10 | Welding robot |
| 13 | Welding torch |
| 15 | Shape measuring instrument |
| 20 | CAD device |
| 30 | Lamination planning device |
| 41 | CAD data acquisition unit |
| 42 | CAD data division unit |
| 43 | Lamination plan generation unit |
| 44 | Lamination plan output unit |
| 50 | Control device |
| 61 | Lamination plan acquisition unit |
| 62 | Control program storage unit |
| 63 | Control program execution unit |
| 64 | Planned value storage unit |
| 65 | Shape profile reception unit |

66    Gap width derivation unit
67    Growth amount derivation unit
68    Lamination condition correction unit
69    Control program update unit
70    Recording medium

**Claims**

1.  A control method for a lamination molding device that molds a molded object by laminating weld beads with a welding torch, the method comprising:

    a step of acquiring a planned value of a width of a gap formed by a plurality of weld beads from a lamination plan related to a process of molding the molded object;
    a step of measuring a plurality of shape profiles respectively corresponding to the plurality of weld beads laminated on the basis of the lamination plan;
    a step of deriving an actual value of the width of the gap on the basis of the plurality of shape profiles; and
    a step of correcting a lamination condition of the plurality of weld beads so as to reduce an amount of deviation between the planned value of the width of the gap and the actual value of the width of the gap.

2.  The control method for a lamination molding device according to claim 1, wherein in the deriving step, a distance between specific positions of the shape profiles of the plurality of shape profiles is derived as the actual value of the width of the gap.

3.  The control method for a lamination molding device according to claim 2, wherein the specific position is a distal end position protruding in a direction of the gap of each shape profile of the plurality of shape profiles.

4.  The control method for a lamination molding device according to claim 1, wherein in the deriving step, a distal end position protruding in a direction of the gap of each weld bead of the plurality of weld beads is estimated from a specific position of each shape profile of the plurality of shape profiles, and a distance between the distal end positions is derived as the actual value of the width of the gap.

5.  The control method for a lamination molding device according to claim 4, wherein the specific position is a distal end position protruding in a direction of the gap of each shape profile of the plurality of shape profiles.

6.  The control method for a lamination molding device according to claim 1, wherein in the correcting step, the lamination condition is corrected using a correction formula in which at least one of a proportional term, a differential term, and an integral term according to the amount of deviation is added to a standard set value of the lamination condition.

7.  The control method for a lamination molding device according to claim 6, wherein in the correcting step, the correction formula in which the integral term is not added to a standard set value of the lamination condition is switched to the correction formula in which the integral term is added to a standard set value of the lamination condition according to progress of lamination.

8.  The control method for a lamination molding device according to claim 1, wherein in the correcting step, a planned value of a target position when each weld bead of the plurality of weld beads of a next layer is laminated is corrected to a specific position of each shape profile of the plurality of shape profiles.

9.  The control method for a lamination molding device according to claim 8, wherein the specific position is a position where the planned value of a target position extended in a lamination direction intersects with each of the shape profiles.

10. The control method for a lamination molding device according to claim 1, wherein: in the correcting step, a correction method for correcting the lamination condition is switched from a first correction method to a second correction method according to progress of lamination;

    the first correction method is a method for correcting the lamination condition so as to reduce an amount of deviation between a planned value of a growth amount of each weld bead of the plurality of weld beads in a lamination direction and an actual value of the growth amount derived on the basis of the shape profile; and

the second correction method is a method for correcting the lamination condition so as to reduce an amount of deviation between the planned value of the width of the gap and the actual value of the width of the gap.

11. A control device for a lamination molding device that molds a molded object by laminating weld beads with a welding torch, the control device comprising:

an acquisition unit that acquires a planned value of a width of a gap formed by a plurality of weld beads from a lamination plan related to a process of molding the molded object;

a measurement unit that measures a plurality of shape profiles respectively corresponding to the plurality of weld beads laminated on the basis of the lamination plan;

a derivation unit that derives an actual value of the width of the gap on the basis of the plurality of shape profiles; and

a correction unit that corrects a lamination condition of the plurality of weld beads so as to reduce an amount of deviation between the planned value of the width of the gap and the actual value of the width of the gap.

12. A program for causing a control device for a lamination molding device that molds a molded object by laminating weld beads with a welding torch to achieve:

a function of acquiring a planned value of a width of a gap formed by a plurality of weld beads from a lamination plan related to a process of molding the molded object;

a function of measuring a plurality of shape profiles respectively corresponding to the plurality of weld beads laminated on the basis of the lamination plan;

a function of deriving an actual value of the width of the gap on the basis of the plurality of shape profiles; and

a function of correcting a lamination condition of the plurality of weld beads so as to reduce an amount of deviation between the planned value of the width of the gap and the actual value of the width of the gap.

Fig. 1

Fig. 2

Fig. 3

S11. FLOW PATH LAMINATION

S12. SHAPE MEASUREMENT

S17. CLOSING

LAMINATION PLANNING DEVICE (CONTROL PROGRAM)

FIRST LAYER

SECOND LAYER TO n-TH LAYER

S15. CONTROL PROGRAM UPDATE

S14. STACKING CONDITION AND TARGET POSITION CORRECTION

TARGET POSITION LEFT          TARGET POSITION RIGHT

GAP

S13. GAP WIDTH AND TARGET POSITION DERIVATION

S16. REPEAT FROM SECOND LAYER TO n-TH LAYER

Fig. 4

30

LAMINATION PLANNING DEVICE

CAD DATA
ACQUISITION UNIT — 41

CAD DATA DIVISION UNIT — 42

LAMINATION PLAN
GENERATION UNIT — 43

LAMINATION PLAN
OUTPUT UNIT — 44

Fig. 5

Fig. 6

Fig. 7

EP 4 755 561 A1

Fig. 8

```
                    ┌─────────────┐
                    │    START    │
                    └─────────────┘
                           │
                           ▼
        ┌───────────────────────────────────────┐
        │ ACQUIRE THREE-DIMENSIONAL CAD DATA     │───S301
        └───────────────────────────────────────┘
                           │
                           ▼
        ┌───────────────────────────────────────┐
        │ GENERATE LAYER SHAPE DATA BY DIVIDING  │
        │    THREE-DIMENSIONAL CAD DATA          │───S302
        │      INTO PLURALITY OF LAYERS          │
        └───────────────────────────────────────┘
                           │
                           ▼
        ┌───────────────────────────────────────┐
        │ GENERATE LAMINATION PLAN FROM LAYER SHAPE DATA │───S303
        └───────────────────────────────────────┘
                           │
                           ▼
        ┌───────────────────────────────────────┐
        │       OUTPUT LAMINATION PLAN           │───S304
        └───────────────────────────────────────┘
                           │
                           ▼
                    ┌─────────────┐
                    │     END     │
                    └─────────────┘
```

Fig. 9

START

i = 1 — S501

PERFORM CONTROL TO MOLD i-TH LAYER — S502

S503
i < n ?   NO

YES   S504

RECEIVE SHAPE PROFILE

S510
PERFORM CONTROL TO CLOSE GAP

DERIVE GAP WIDTH AND TARGET POSITION OF NEXT LAYER — S505

END

CORRECT LAMINATION CONDITION TO REDUCE DEVIATION AMOUNT OF GAP WIDTH — S506

CORRECT TARGET POSITION OF NEXT LAYER — S507

UPDATE CONTROL PROGRAM — S508

i = i + 1 — S509

Fig. 10

EP 4 755 561 A1

Fig. 11

CONTROL DEVICE ~50

LAMINATION PLAN ACQUISITION UNIT ~61

CONTROL PROGRAM STORAGE UNIT ~62

CONTROL PROGRAM EXECUTION UNIT ~63

PLANNED VALUE STORAGE UNIT ~64

LAMINATION CONDITION CORRECTION UNIT ~68

CONTROL PROGRAM UPDATE UNIT ~69

GAP WIDTH DERIVATION UNIT ~66

GROWTH AMOUNT DERIVATION UNIT ~67

SHAPE PROFILE RECEPTION UNIT ~65

Fig. 12

```
                    ( START )
                        │
                        ▼
        ┌───────────────────────────────┐
        │           i = 1               │───── S551
        └───────────────────────────────┘
                        │
  ┌─────────────────────┤
  │                     ▼
  │     ┌───────────────────────────────┐
  │     │ PERFORM CONTROL TO MOLD i-TH LAYER │── S552
  │     └───────────────────────────────┘
  │                     │
  │                     ▼            S553
  │              ╱──────────────╲         NO
  │             ◁    i < n ?      ▷──────────────────┐
  │              ╲──────────────╱                    │
  │                     │ YES                         │
  │                     ▼      S554          S563     ▼
  │     ┌───────────────────────┐   ┌───────────────────────────┐
  │     │  RECEIVE SHAPE PROFILE │   │ PERFORM CONTROL TO CLOSE GAP │
  │     └───────────────────────┘   └───────────────────────────┘
  │                     │                            │
  │                     ▼      S555                  ▼
  │              ╱──────────────╲  NO            ( END )
  │             ◁    i < m ?      ▷────────┐
  │              ╲──────────────╱          │
  │                     │ YES              │
  │          S556       ▼            S558  ▼
  │  ┌────────────────────────┐  ┌────────────────────────┐
  │  │ DERIVE GROWTH AMOUNT AND│  │ DERIVE GAP WIDTH AND    │
  │  │ TARGET POSITION OF NEXT LAYER│ │ TARGET POSITION OF NEXT LAYER│
  │  └────────────────────────┘  └────────────────────────┘
  │          S557       │            S559  │
  │  ┌────────────────────────┐  ┌────────────────────────┐
  │  │CORRECT LAMINATION CONDITION TO REDUCE│ │CORRECT LAMINATION CONDITION TO│
  │  │ DEVIATION AMOUNT OF GROWTH AMOUNT│ │REDUCE DEVIATION AMOUNT OF GAP WIDTH│
  │  └────────────────────────┘  └────────────────────────┘
  │                     │◄───────────────┘
  │                     ▼
  │  ┌───────────────────────────────┐
  │  │ CORRECT TARGET POSITION OF NEXT LAYER │── S560
  │  └───────────────────────────────┘
  │                     │
  │                     ▼
  │  ┌───────────────────────────────┐
  │  │     UPDATE CONTROL PROGRAM     │── S561
  │  └───────────────────────────────┘
  │                     │
  │                     ▼
  │  ┌───────────────────────────────┐
  │  │          i = i + 1            │── S562
  │  └───────────────────────────────┘
  │                     │
  └─────────────────────┘
```

## INTERNATIONAL SEARCH REPORT

| International application No. |
|---|
| **PCT/JP2024/037547** |

| A. | CLASSIFICATION OF SUBJECT MATTER |
|---|---|

***B23K 9/04***(2006.01)i; ***B23K 9/095***(2006.01)i
FI:  B23K9/04 G; B23K9/04 Z; B23K9/095 510D; B23K9/095 501G

According to International Patent Classification (IPC) or to both national classification and IPC

| B. | FIELDS SEARCHED |
|---|---|

Minimum documentation searched (classification system followed by classification symbols)

B23K9/04; B23K9/095

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-138535 A (RICOH COMPANY, LTD.) 03 September 2020 (2020-09-03) paragraphs [0010]-[0150], fig. 1-25 | 1-12 |
| Y | JP 2021-126694 A (KABUSHIKI KAISHA KOBE SEIKO SHO) 02 September 2021 (2021-09-02) paragraphs [0017]-[0102], fig. 1-11 | 1-12 |
| Y | WO 2022/254671 A1 (MITSUBISHI ELECTRIC CORPORATION) 08 December 2022 (2022-12-08) fig. 1-16 | 1-12 |
| A | JP 2021-126786 A (SEIKO EPSON CORPORATION) 02 September 2021 (2021-09-02) claim 1, fig. 6 | 1-12 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 December 2024** | **07 January 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/037547**

| Patent document cited in search report | | | Publication date (day/month/year) | Patent family member(s) | | | Publication date (day/month/year) |
|---|---|---|---|---|---|---|---|
| JP | 2020-138535 | A | 03 September 2020 | US paragraphs [0037]-[0177], fig. 1-25 EP | 2020/0156322 3656536 | A1 A1 | |
| JP | 2021-126694 | A | 02 September 2021 | (Family: none) | | | |
| WO | 2022/254671 | A1 | 08 December 2022 | US fig. 1-16 CN | 2024/0253162 117337222 | A1 A | |
| JP | 2021-126786 | A | 02 September 2021 | US claim 1, fig. 6 | 2021/0245426 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000033477 A
- JP 2023216840 A